# EUROPÄISCHE PATENTSCHRIFT

(11) **EP 2 875 256 B1**
(45) Veröffentlichungstag und Bekanntmachung des Hinweises auf die Patenterteilung: **07.12.2016**
(21) Anmeldenummer: 13750842.0
(22) Anmeldetag: 17.07.2013
(51) Int. Cl.: F16F 15/131, F16H 45/02

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 20.07.2012 DE 102012014411; 17.12.2012 DE 102012223335
(43) Veröffentlichungstag der Anmeldung: 27.05.2015
(73) Patentinhaber: Schaeffler Technologies AG & Co. KG, 91074 Herzogenaurach (DE)
(72) Erfinder: KRAUSE, Thorsten, 77815 Bühl (DE); JEGAN, Daniel, 76547 Sinzheim (DE)
(86) Internationale Anmeldenummer: PCT/DE2013/200063
(87) Internationale Veröffentlichungsnummer: WO 2014/012545

(56) Entgegenhaltungen:
- DE-A1-102011 007 118
- FR-A1- 2 719 642

## Beschreibung

Die vorliegende Erfindung betrifft eine Drehschwingungsdämpfungsanordnung, wie sie bspw. im Antriebsstrang eines Fahrzeugs eingesetzt werden, um Drehungleichförmigkeiten zu dämpfen bzw. soweit wie möglich zu eliminieren.

Vor allem bei mit Verbrennungskraftmaschinen aufgebauten Antriebssträngen kann bedingt dadurch, dass in Verbrennungskraftmaschinen periodisch Zündungen auftreten und die dabei freigesetzte Energie in eine Drehbewegung einer Kurbelwelle umgesetzt wird, grundsätzlich kein konstantes Drehmoment in einen Antriebsstrang eingeleitet werden. Sowohl das von der Kurbelwelle abgegebene Drehmoment als auch deren Drehzahl unterliegt Schwankungen bzw. Schwingungen, allgemein Drehungleichförmigkeiten. Da derartige Drehungleichförmigkeiten im Fahrbetrieb spürbar sein können, besteht allgemein die Zielsetzung, diese soweit wie möglich zu eliminieren.

Es ist bspw. bekannt, durch den Einsatz von Kraft- oder Energiespeichern, also bspw. Federn oder sich bewegenden Massen oder Kombinationen daraus, die bei derartigen Drehungleichförmigkeiten auftretenden Energien vorübergehend zu speichern und sie dann so in den Antriebsstrang weiterzugeben, dass ein geglätteter Drehzahl- bzw. Drehmomentverlauf erreicht werden kann. So genannte Zweimassenschwungräder sind ein Beispiel von in diesem Sinne arbeitenden Drehschwingungsdämpfungsanordnungen. Als Tilger bekannte Massenpendel setzen die im Fahrzustand auftretenden Drehungleichförmigkeiten in oszillierende Auslenkungen von Schwingungsmassen um, wobei die Auslenkung entgegen der Fliehkraft erfolgt und durch Vorgabe der Auslenkungsbahn bzw. auch der auszulenkenden Massen eine Abstimmung auf bestimmte Anregungsdrehzahlen bzw. Anregungsfrequenzen erreicht werden kann. Derartige Tilger können mit, durch den Einsatz von Federn oder Ähnlichem schwingenden Massensystemen kombiniert werden. Problematisch bei solchen Drehschwingungsdämpfungsanordnungen ist regelmäßig, dass die Dämpfung der Drehungleichförmigkeiten lediglich in einem begrenzten Betriebsbereich (Drehzahlbereich, Frequenzbereich) erreicht werden kann. In anderen Betriebsbereichen wird die Isolationswirkung nicht verbessert oder sogar verschlechtert.

Das Dokument DE 10 2011 007 118 A1 wird als nächstliegenden Stand des Technik betrachtet und offenbart alle Merkmale des Oberbegriffs des Anspruchs

Es ist die Aufgabe der vorliegenden Erfindung, die oben angeführten Probleme zu lösen und insbesondere eine Drehschwingungsdämpfungsanordnung bereitzustellen, die bei kompakter Baugröße die in den Antriebsstrang eingeleiteten Drehungleichförmigkeiten in einem größeren Betriebsbereich dämpfen kann.

Die erfindungsgemäße Drehschwingungsdämpfungsanordnung umfasst eine Antriebsseite und eine Abtriebsseite, wobei zwischen Antriebsseite und Abtriebsseite ein erster Drehmomentübertragungsweg und parallel dazu ein zweiter Drehmomentübertragungsweg sowie eine Planetengetriebeanordnung vorgesehen sind, wobei die Planetengetriebeanordnung zur Überlagerung der über Drehmomentübertragungswege geleiteten Drehmomente vorgesehen ist. Im ersten Drehmomentübertragungsweg ist eine erste Verschiebeanordnung zur Erzeugung einer Phasenverschiebung von über den ersten Drehmomentübertragungsweg geleiteten Drehungleichförmigkeiten bezüglich der über den zweiten Drehmomentübertragungsweg geleiteten Drehungleichförmigkeiten vorgesehen. Die Planetengetriebeanordnung weist zumindest einen Planetenträger mit zumindest einer ersten Planetenradachse und einem ersten Wirkradius auf, wobei auf der zumindest einen ersten Planetenradachse zwei Planetenräder angeordnet sind, von denen ein erstes Planetenrad mit einem antriebsseitigen ersten Hohlrad und ein zweites Planetenrad mit einem abtriebsseitigen zweiten Hohlrad kämmt, wobei zumindest für eine Verbindung zwischen Planetenrad und Hohlrad gilt, dass ein erster Abstand zwischen mindestens einer Planetenradachse und einem Kraftübertragungspunkt an einem Hohlrad veränderbar ist.

Es wird darauf hingewiesen, dass der erste Abstand zwischen der mindestens einen Planetenradachse und dem Kraftübertragungspunkt an dem Hohlrad oder aber der erste Abstand zwischen einer weiteren Planetenradachse und dem Kraftübertragungspunkt an dem Hohlrad veränderbar ist. In beiden Fällen ist insbesondere eine Umschaltung vorgesehen, durch die der erste Abstand verändert werden kann. Im Folgenden sind zwei bevorzugten Ausgestaltungen der Drehschwingungsdämpfungsanordnung angeführt.

Bei der ersten Ausgestaltung wird der Einsatz von unrunden Planetenrädern vorgeschlagen. Bei der zweiten Ausgestaltung wird der Einsatz einer zweiten Planetenradachse mit dritten und vierten Planetenrädern vorgeschlagen, wobei sich der erste Wirkradius der ersten Planetenradachse von dem zweiten Wirkradius der zweiten Planetenradachse unterscheidet.

Bei dieser Drehschwingungsdämpfungsanordnung wird durch Einsatz der Phasenverschiebeanordnung dafür gesorgt, dass zunächst durch Aufteilung und dann wieder Zusammenführung des übertragenden Drehmoments durch die dabei eingeführte Phasenverschiebung eine destruktive Überlagerung von Schwingungsanteilen in dem zu übertragenden Drehmoment auftritt. Im Idealfall findet zumindest in einem besonders kritischen Frequenzbereich eine nahezu vollständige Eliminierung der Drehungleichförmigkeiten statt.

Die hier vorgeschlagene Drehschwingungsdämpfungsanordnung ermöglicht es, dass für unterschiedliche Betriebszustände (zum Beispiel bei unterschiedlichen Drehzahlen eines Antriebsstranges) unterschiedliche Dämpfungen bereitgestellt werden. Dies wird hier erreicht, indem der erste Abstand zwischen mindestens einer Planetenradachse und einem Kraftübertragungspunkt an einem Hohlrad veränderbar ist. Der Kraftübertragungspunkt an dem Hohlrad ist der Punkt (ggf. auch eine Fläche oder Linie), an dem ein Drehmoment durch Berührung zwischen dem Planetenrad und dem Hohlrad (insbesondere an der Verzahnung) übertragen wird.

Gemäß einer besonders vorteilhaften Ausgestaltung gilt zumindest für ein Planetenrad, dass der erste Abstand zwischen der mindestens einen Planetenradachse und einem Kraftübertragungspunkt an einem Hohlrad aufgrund eines unrunden Planetenrads veränderbar ist.

Gemäß einer vorteilhaften Ausgestaltung weist das antriebsseitige erste Hohlrad und/ oder das abtriebsseitige zweite Hohlrad eine Verzahnung entlang einer Innenumfangsfläche auf, wobei die Innenumfangsfläche mit der Verzahnung in einer Umfangsrichtung einen sich verändernden zweiten Abstand zu einer Mittelachse aufweist.

Gemäß einer weiteren vorteilhaften Ausgestaltung weist das jeweils mit dem Hohlrad im Eingriff stehende mindestens eine Planetenrad eine zumindest teilweise ellipsenförmige und eine Verzahnung aufweisende Außenumfangsfläche auf.

Unrund bedeutet hier, dass z. B. das Planetenrad eine ellipsenförmige Außenumfangsfläche aufweist, wobei also der Durchmesser des Planetenrades veränderbar ist zwischen einer kurzen Ellipsenachse und einer langen Ellipsenachse.

Insbesondere wird vorgeschlagen, dass der Unterschied zwischen kurzer Ellipsenachse (kleinster erster Abstand) und der langen Ellipsenachse (größter erster Abstand) mindestens 10%, bevorzugt mindestens 20% der kurzen Ellipsenachse beträgt.

Eine Umschaltung bewirkt, dass zumindest das eine, unrunde Planetenrad gegenüber dem Hohlrad eine Bewegung durchführt, so dass sich der Kraftübertragungspunkt am Planetenrad und am Hohlrad ändert. Insbesondere erfolgt die Kraftübertragung entweder über die kurze Ellipsenachse des Planentrades oder über die lange Ellipsenachse.

Es ist insbesondere eine nahezu stufenlose Verstellung des ersten Abstands (zwischen kurzer Ellipsenachse und langer Ellipsenachse sowie dem dazwischen angordenten Übergangsbereich) möglich.

Gemäß einer anderen, besonders vorteilhaften Ausgestaltung wird vorgeschlagen, dass die Planetengetriebeanordnung zumindest zusätzlich einen zweiten Planetenträger mit zumindest einer zweiten Planetenradachse und einem zweiten Wirkradius aufweist, wobei der zweite Wirkradius von dem ersten Wirkradius verschieden ist, wobei auf der zumindest einen zweiten Planetenradachse mindestens zwei Planetenräder angeordnet sind, von denen ein drittes Planetenrad mit dem antriebsseitigen ersten Hohlrad und ein viertes Planetenrad mit dem abtriebsseitigen zweiten Hohlrad kämmt, wobei eine Umschaltung vorgesehen ist, so dass entweder die Planetenräder auf der ersten Planetenradachse oder die Planetenräder auf der zweiten Planetenradachse mit den Hohlrädern drehmomentübertragend im Eingriff sind.

Insbesondere wird vorgeschlagen, dass in diesem Fall kreisrunde Planetenräder und Hohlräder eingesetzt werden. Hier erfolgt also die Änderung des ersten Abstandes dadurch, dass entweder erste und zweite Planetenräder oder aber dritte und vierte Planetenräder mit den Hohlrädern drehmomentübertragend im Eingriff sind.

Insbesondere bewirkt die Umschaltung, dass das erste und das zweite Planetenrad oder das dritte und das vierte Planetenrad miteinander drehfest verbunden sind. So werden Drehmomente über das zweite oder über das vierte Planetenrad auf das abtriebsseitige zweite Hohlrad übertragen.

Insbesondere wird vorgeschlagen, dass die Planetengetriebeanordnung zumindest mindestens zwei erste Planetenträger mit jeweils einer ersten Planetenradachse und mindestens zwei zweite Planetenträger mit jeweils einer zweiten Planetenradachse umfasst, wobei jeweils erste Planetenträger und zweite Planetenträger in einer Umfangsrichtung abwechselnd angeordnet sind.

Insbesondere sind jeweils drei erste Planetenträger und drei zweite Planetenträger in entsprechender abwechselnder Anordnung in Umfangsrichtung vorgesehen.

Gemäß einer weiteren bevorzugten Weiterbildung wird vorgeschlagen, dass weitere, Planetenräder tragende, Planetenradachsen vorgesehen sind, die Wirkradien aufweisen, die sich von dem ersten und dem zweiten Wirkradius unterscheiden.

Gemäß einer weiteren besonders bevorzugten Ausgestaltung ist der erste Abstand auf zumindest eine der folgenden Arten veränderbar:
- durch Verdrehung eines als Phasenschiebeanordnung eingesetzten Torsionsdämpfers; oder
- in Abhängigkeit von einer Drehzahl der Drehschwingungsdämpfungsanordnung um die Mittelachse durch Fliehkraft; oder
- durch eine hydraulische Betätigung.

Es wird insbesondere vorgeschlagen, dass die Umschaltung zwischen erster Planetenradachse und zweiter Planetenradachse in Abhängigkeit von der Drehzahl und/ oder von dem hydraulischen Betriebsdruck innerhalb der Drehschwingungsdämpfungsanordnung erfolgt

Es wird weiterhin ein Kraftfahrzeug mit einer Antriebseinheit und einer Abtriebseinheit und einer dazwischen angeordneten erfindungsgemäßen Drehschwindungsdämpferanordnung vorgeschlagen.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Drehschwindungsdämpferanordnung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Drehschwindungsdämpferanordnung ist für Kleinwagen besonders vorteilhaft, weil die Gesamtbaugröße klein ist und zugleich eine äußerst zuverlässige Dämpfung über einen sehr weiten Drehzahlbereich erreicht wird. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini, beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein Kraftfahrzeug mit einer Drehschwingungsdämpfungsanordnung;
- Fig. 2:: eine aus dem Stand der Technik bekannte Drehschwingungsdämpfungsanordnung;
- Fig. 3:: eine Funktionsdarstellung einer Drehschwingungsdämpfungsanordnung gemäß einer ersten Ausgestaltung;
- Fig. 4:: eine Planetengetriebeanordnung gemäß einer ersten Ausgestaltung;
- Fig. 5:: eine Funktionsdarstellung einer Drehschwingungsdämpfungsanordnung gemäß einer zweiten Ausgestaltung;
- Fig. 6:: eine Planetengetriebeanordnung gemäß einer zweiten Ausgestaltung.

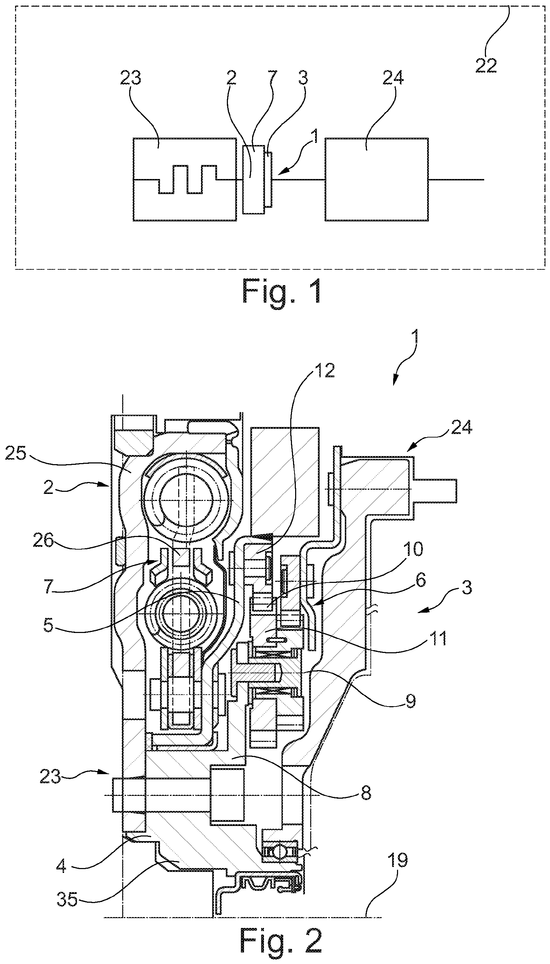

Fig. 1 zeigt ein Kraftfahrzeug 22 mit einer Antriebseinheit 23, einer Abtriebseinheit 24 und einer dazwischen angeordneten Drehschwingungsdämpfungsanordnung 1. Die Drehschwingungsdämpfungsanordnung weist eine Antriebsseite 2 und eine Abtriebsseite 3 auf, die entsprechend zur Übertragung von Drehmomenten mit der Antriebseinheit 23 bzw. mit der Abtriebseinheit 24 verbunden sind. Innerhalb der Drehschwingungsdämpfungsanordnung 1 ist eine erste Phasenverschiebeanordnung 7 angeordnet, so dass auftretende Drehschwingungen durch eine Phasenverschiebung gedämpft werden können.

Fig. 2 zeigt eine aus dem Stand der Technik bekannte Drehschwingungsdämpfungsanordnung 1. Diese weist eine Antriebsseite 2 und eine Abtriebsseite 3 auf. Die Antriebsseite 2 ist mit einer Antriebseinheit 23 zur Übertragung von Drehmomenten drehfest verbunden. Über eine Primärseite 25 werden Drehmomente in die Drehschwingungsdämpfungsanordnung 1 eingeleitet. Die Primärseite 25 ist mit einer ersten Phasenverschiebeanordnung 7 (hier eine Torsionsfederanordnung) verbunden. Über die erste Phasenverschiebeanordnung 7 werden Drehmomente auf eine Sekundärseite 26 übertragen. Die Sekundärseite 26 ist mit einem ersten Hohlrad 12 verbunden, das im kämmenden Eingriff mit einem ersten Planetenrad 11 steht. Entsprechend werden Drehmomente von der Sekundärseite 26 über das erste Hohlrad 12 auf das erste Planetenrad 11 übertragen. Diese Bauteile bilden den zweiten Drehmomentübertragungsweg 5. Der erste Drehmomentübertragungsweg 4 weist eine wesentlich höhere Steifigkeit auf als der zweite Drehmomentübertragungsweg 5 und wird gebildet durch die Antriebsseite 23 und die auf der antriebsseitigen Welle angeordnete Hülse 35. Über die Hülse 35 ist der erste Planetenträger 8 mit der ersten Planetenradachse 9 angebunden.

Über den ersten Drehmomentübertragungsweg 4 wird also die erste Planetenradachse 9 angetrieben und über den zweiten Drehmomentübertragungsweg 5 das erste Hohlrad 12. Bei konstanter Drehzahl und konstantem Drehmoment drehen auch erste Planetenradachse 9 und erstes Hohlrad 12 mit gleicher Drehzahl, so dass das Planetenrad 11 keine Relativbewegung gegenüber dem ersten Hohlrad 12 ausführt. Über das erste Planetenrad 11 wird dann das zweite Hohlrad 14 angetrieben.

Das erste Planetenrad 11 kämmt nun mit dem ersten Hohlrad 12 und dem zweiten Hohlrad 14, wobei das zweite Hohlrad 14 mit der Abtriebseinheit 24 der Drehschwingungsdämpfungsanordnung 1 drehfest verbunden ist. Die hier gezeigte Drehschwingungsdämpfungsanordnung 1 ist so aus der WO 2011/147633 A1 bekannt. Es ist zu erkennen, dass das erste Planetenrad 11 nicht als voll umlaufendes Zahnrad sondern als Zahnradsegment ausgebildet ist. Dies ist möglich, da das antriebsseitige erste Hohlrad 12 und das abtriebsseitige zweite Hohlrad 14 nur vergleichsweise geringe Relativdrehungen bezüglich des ersten Planetenradträgers 8 ausführen und so auch das erste Planetenrad 11 nur in einem bestimmten Winkelbereich um die erste Planetenradachse 9 dreht.

Für den Fall, dass ein konstantes Drehmoment an der Antriebsseite 2 vorliegt, dass an der Abtriebsseite 3 entsprechend abgegeben wird, bedeutet dies, dass der erste Planetenträger 8 und die Primärseite 25 sowie auch die Sekundärseite 26 und mithin das abtriebsseitige zweite Hohlrad 14 mit identischer Drehzahl um die Mittelachse 19 rotieren. Infolge dessen werden die ersten Planetenräder 11 sich nicht um ihre eigene Drehachse (Planetenradachse 9) drehen. Dies wiederum bedingt, dass auch das abtriebsseitige zweite Hohlrad 14 mit der gleichen Drehzahl wie der erste Planetenträger 8 dreht.

Tritt nun ein spontaner Drehmomentanstieg an der Antriebsseite 2 im Sinne einer Schwingungsanregung auf, so hat dies eine entsprechende Drehbeschleunigung im zweiten Drehmomentübertragungsweg 5, insbesondere des Planetenträgers 8, zur Folge. Dieser versucht, durch die Wechselwirkung der ersten Planetenräder 11 mit dem abtriebsseitigen zweiten Hohlrad 14 der Planetengetriebeanordnung 6, ein entsprechend ansteigendes Drehmoment bzw. eine entsprechend ansteigende Drehzahl auf die Abtriebsseite 3 zu übertragen.

Der spontane Anstieg des Drehmoments bzw. der Drehzahl führt jedoch im ersten Drehmomentübertragungsweg 4 dazu, dass unter Kompression der ersten Phasenverschiebeanordnung 7 (Kompression der Federn in Umfangsrichtung) eine Relativdrehung zwischen der Primärseite 25 und der Sekundärseite 26 auftritt. Diese Relativdrehung führt dazu, dass vorübergehend die Sekundärseite 26 mit etwas geringerer Drehzahl dreht als die Primärseite 25 und somit auch mit geringerer Drehzahl als der erste Planetenradträger 8. Diese geringere Drehzahl führt dazu, dass die ersten Planetenräder 11 nunmehr angetrieben durch eine Drehzahldifferenz zwischen der Sekundärseite 26 und dem Planetenträger 8 um ihre eigene Drehachse (erste Planetenradachse 9) drehen und dabei auch das abtriebsseitige zweite Hohlrad 14 mitnehmen. Die Folge ist, dass das abtriebsseitige zweite Hohlrad 14 der ansteigenden Drehzahl des Planetenträgers 8 nicht folgen kann, da die durch die Sekundärseite 26 bewirkte Drehung der ersten Planetenräder 11 eine gegenläufige Bewegung des abtriebsseitigen zweiten Hohlrads 14 auslöst.

Die Drehmomentanteile werden an der Stelle, an der die ersten Planetenräder 11 mit den beiden Hohlrädern 12, 14 kämmen, wieder zusammengeführt. Die Schwingungsanteile, welche über die beiden Drehmomentübertragungswege 4, 5 geführt werden, überlagern einander nun im Sinne einer destruktiven Differenz. Nur theoretisch erreichbar im Idealfall kommt es zu einer vollständigen Auslöschung dieser sich überlagernden Schwingungsanteile.

Bei dieser aus dem Stand der Technik bekannten Anordnung kann aber nur eine Dämpfung für einen bestimmten Betriebsbereich bzw. einen bestimmten Drehzahlbereich erreicht werden. Eine Veränderung der Übersetzung innerhalb der Drehschwindungsdämpferanordnung ist hier nicht möglich, da jedes Hohlrad nur mit einem Planetenrad kämmt.

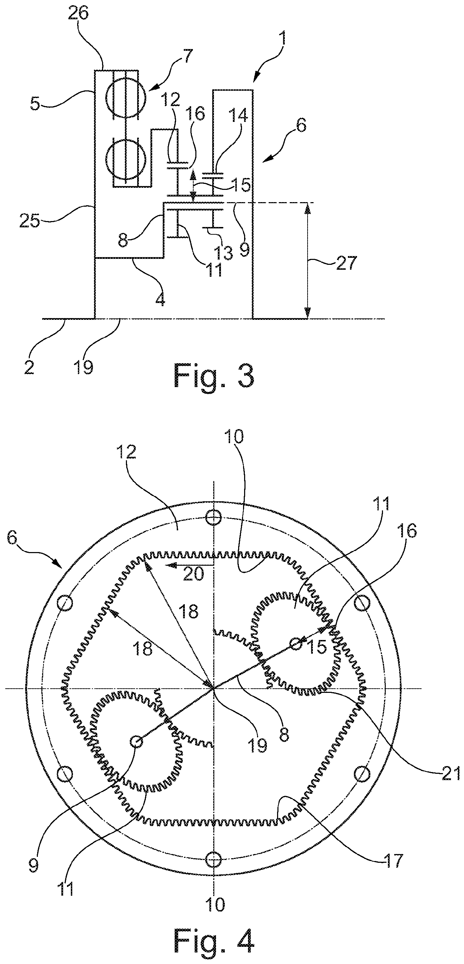

Fig. 3 zeigt eine Funktionsdarstellung der Drehschwingungsdämpfungsanordnung 1. Über die Antriebsseite 2 wird ein Drehmoment entlang eines zweiten Drehmomentübertragungsweges 5 über die Primärseite 25, die Phasenverschiebeanordnung 7 und die Sekundärseite 26 geleitet und entlang eines ersten Drehmomentübertragungsweges 4 über den ersten Planetenträger 8 auf die erste Planetenradachse 9 mit dem ersten Planetenrad 11 und dem zweiten Planetenrad 13. Die Planetengetriebeanordnung 6 bildet also eine Übersetzung, wobei ein erstes Planetenrad 11 mit einem ersten antriebsseitigen Hohlrad 12 und ein auf der gleichen Planetenradachse 9 angeordnetes zweites Planetenrad 13 mit einem abtriebsseitigen zweiten Hohlrad 14 kämmt. Der Planetenradträger 8 weist entsprechend einen ersten Wirkungsradius 27 ausgehend von der Mittelachse 19 auf. Das Drehmoment der Antriebsseite 2 wird aufgeteilt und wird einerseits über den zweiten Drehmomentübertragungsweg 5 von dem antriebsseitigen ersten Hohlrad 12 über den Kraftübertragungspunkt 16 auf das erste Planetenrad 11 übertragen. Dieser Kraftübertragungspunkt 16 ist in einem ersten Abstand 15 von der ersten Planetenradachse 9 entfernt angeordnet. Das Drehmoment der Antriebsseite 2 wird andererseits über den ersten Drehmomentübertragungsweg 4 und die Planetenradachse 9 auf das abtriebsseitige zweite Hohlrad 14 übertragen. Über die Planetenräder 11, 13 wird das aufgeteilte Drehmoment wieder zusammengeführt (ggf. Phasenverschoben), so dass auftretende Drehungleichförmigkeiten gedämpft übertragen werden können.

Es wird hier nun gezeigt, dass der erste Abstand 15 in dieser Planetengetriebeanordnung 6 veränderbar ist, so dass zumindest eine zweite Übersetzung bereitgestellt werden kann. Durch diese zweite Übersetzung kann eine verbesserte Dämpfung in einem zweiten Betriebspunkt bzw. in einem zweiten Betriebsbereich bzw. für einen zweiten Drehzahlbereich bereitgestellt werden.

Fig. 4 zeigt eine Planetengetriebeanordnung 6, durch die eine solche schaltbare Übersetzung ermöglicht wird. Gezeigt ist hier ein antriebsseitiges erstes Hohlrad 12, das an seiner Innenumfangsfläche 17 eine Verzahnung 10 aufweist. Entlang der Umfangsrichtung 20 variiert der zweite Abstand 18 der Verzahnung 10 bzw. der Innenumfangsfläche 17 von der Mittelachse 19. Die ersten Planetenräder 11 werden hier ellipsenförmig und mit einer an der Außenumfangsfläche 21 angeordneten Verzahnung 10 ausgeführt. Diese sind an einem ersten Planetenträger 8 auf einer ersten Planetenradachse 9 angeordnet. Durch eine Verdrehung des ersten Planetenträgers 8 gegenüber dem ersten Hohlrad 12 in Umfangsrichtung 20 wird der erste Abstand 15 (größter Abstand ist lange Ellipsenachse; kleinster Abstand ist kleine Ellipsenachse) geändert. Durch die Anordnung des ellipsenförmigen ersten Planetenrads 11 kann das Drehmoment zwischen erstem Hohlrad 12 und Planetenträger 8 nun an einem Kraftübertragungspunkt 16 über die kurze Ellipsenachse oder die lange Ellipsenachse (oder über eine dazwischen angeordnete Achse) des ersten Planetenrads 11 übertragen werden.

Die Planetengetriebeanordnung 6 kann auch abtriebseitig (ggf. zusätzlich) mit unrunden zweiten Planetenrädern 13 ausgeführt sein, die dann im kämmenden Eingriff mit dem abtriebseitigen zweiten Hohlrad 14 stehen.

Wie bereits im Zusammenhang mit Fig. 2 ausgeführt, können hier auch segmentartig ausgeführte Planetenräder eingesetzt werden, da auch im Fall der unrunden Planetenräder eine Verdrehung der Planetenräder über einen Winkelbereich, der 90° deutlich übersteigt, nicht vorkommen muss.

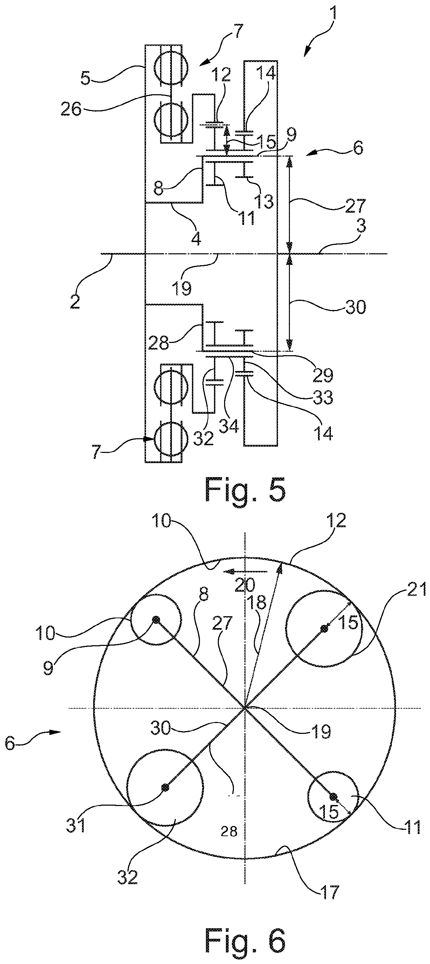

Fig. 5 zeigt eine weitere Funktionsdarstellung einer Drehschwingungsdämpfungsanordnung 1. Ausgehend von einer Antriebsseite 2 werden Drehmomente wieder über erste Drehmomentübertragungswege 4 bzw. zweite Drehmomentübertragungsweg 5 übertragen. Im Unterschied zur Darstellung in Fig. 3 sind hier jedoch erste Planetenträger 8 mit ersten Wirkradius 27 (obere Bildhälfte) und zweite Planetenträger 28 mit zweitem Wirkradius 30 vorgesehen. Diese sind voneinander unterschiedlich ausgeführt, so dass z. B. in Abhängigkeit von der Drehzahl und durch Betätigung der Umschaltung 34 entweder ein drehmomentübertragender Eingriff der ersten und zweiten Planetenräder 11, 13 oder der dritten und vierten Planetenräder 32, 33 mit dem ersten und dem zweiten Hohlrad 12, 14 gewählt werden kann. Entsprechend wird entweder das Drehmoment über das erste Hohlrad 12 und das erste Planetenrad 11 sowie über den ersten Planetenträger 8 und das zweite Planetenrad 13 übertragen oder über das erste Hohlrad 12 und das dritte Planetenrad 32 sowie über den zweiten Planetenträger 28 und das vierte Planetenrad 33. Durch die Umschaltung 34 werden entweder das erste und zweite Planetenrad 11, 13 miteinander drehfest verbunden oder das dritte und vierte Planetenrad 32, 33. Infolge der drehfesten Verbindung wird eine Übertragung der Drehmomente über die jeweilige Planetenradachse 9, 29 ermöglicht.

Infolge der Umschaltung 34 wird das Drehmoment über die jeweils andere Planetenradachse 9, 29 übertragen. Entsprechend verändert sich infolge der Umschaltung 34 der Wirkradius 27, 30 und damit (wegen der hier kreisrunden Planetenräder) der erste Abstand 15 zwischen der Planetenradachse 9, 29 und dem Hohlrad 12, 14).

Fig. 6 zeigt eine Planetengetriebeanordnung 6, wobei der erste Abstand 15 durch eine Umschaltung 34 geändert wird, indem nämlich entweder erste Planetenräder 11 oder dritte Planetenräder 32 mit dem antriebsseitigen Hohlrad 12 drehmomentübertragend kämmen. Erste Planetenräder 11 und dritte Planetenräder 32 bzw. erste Planetenträger 8 und zweite Planetenträger 28 sind in Umfangsrichtung 20 wechselweise angeordnet.

Es wird erstmals eine Planetengetriebeanordnung 6 für eine Drehschwingungsdämpfungsanordnung 1 vorgeschlagen, bei der eine zwei- oder auch mehrstufige Übersetzung zum Einsatz kommt, so dass in Abhängigkeit von dem jeweiligen Drehzahlbereich die jeweils optimale Dämpfung eingestellt werden kann. Entsprechend wird eine besonders komplexe und flexible Drehschwingungsdämpfungsanordnung vorgeschlagen, die kompakt ausgeführt ist und damit eine geringe Baugröße aufweist sowie ein geringes Gewicht und entsprechend geringe Herstellkosten.

### Bezugszeichenliste

- 1: Drehschwingungsdämpfungsanordnung
- 2: Antriebsseite
- 3: Abtriebsseite
- 4: Erster Drehmomentübertragungsweg
- 5: Zweiter Drehmomentübertragungsweg
- 6: Planetengetriebeanordnung
- 7: Erste Phasenverschiebeanordnung
- 8: Erster Planetenträger
- 9: Erste Planetenradachse
- 10: Verzahnung
- 11: Erstes Planetenrad
- 12: Erstes Hohlrad
- 13: Zweites Planetenrad
- 14: Zweites Hohlrad
- 15: Erster Abstand
- 16: Kraftübertragungspunkt
- 17: Innenumfangsfläche
- 18: Zweiter Abstand
- 19: Mittelachse
- 20: Umfangsrichtung
- 21: Außenumfangsfläche
- 22: Kraftfahrzeug
- 23: Antriebseinheit
- 24: Abtriebseinheit
- 25: Primärseite
- 26: Sekundärseite
- 27: Erster Wirkradius
- 28: Zweiter Planetenträger
- 29: Zweite Planetenradachse
- 30: Zweiter Wirkradius
- 31: Zweite Planetenradachse
- 32: Drittes Planetenrad
- 33: Viertes Planetenrad
- 34: Umschaltung
- 35: Hülse

## Patentansprüche

1. Drehschwingungsdämpfungsanordnung (1), umfassend eine Antriebsseite (2) und eine Abtriebsseite (3), wobei zwischen Antriebsseite (2) und Abtriebsseite (3) ein erster Drehmomentübertragungsweg (4) und parallel dazu ein zweiter Drehmomentübertragungsweg (5) sowie eine Planetengetriebeanordnung (6), zur Überlagerung der über die Drehmomentübertragungswege (4, 5) geleiteten Drehmomente, vorgesehen sind, wobei im ersten Drehmomentübertragungsweg (4) eine erste Phasenschiebeanordnung (7) zur Erzeugung einer Phasenverschiebung von über den ersten Drehmomentübertragungsweg (4) geleiteten Drehungleichförmigkeiten bezüglich der über den zweiten Drehmomentübertragungsweg (5) geleiteten Drehungleichförmigkeiten vorgesehen ist, wobei die Planetengetriebeanordnung (6) zumindest einen ersten Planetenträger (8) mit zumindest einer ersten Planetenradachse (9) und einem ersten Wirkradius (27) aufweist, wobei auf der zumindest einen ersten Planetenradachse (9) zwei Planetenräder (11, 13) angeordnet sind, von denen ein erstes Planetenrad (11) mit einem antriebsseitigen ersten Hohlrad (12) und ein zweites Planetenrad (13) mit einem abtriebsseitigen zweiten Hohlrad (14) kämmt, **dadurch gekennzeichnet, dass** zumindest für eine Verbindung zwischen einem Planetenrad (11, 13) und einem Hohlrad (12, 14) gilt, dass ein erster Abstand (15) zwischen mindestens einer Planetenradachse (9) und einem Kraftübertragungspunkt (16) an einem Hohlrad (12, 14) veränderbar ist.

2. Drehschwingungsdämpfungsanordnung (1) nach Anspruch 1, wobei der erste Abstand (15) zwischen der mindestens einen Planetenradachse (9) und dem Kraftübertragungspunkt (16) an einem Hohlrad (12, 14) aufgrund eines unrunden Planetenrads (11, 13) veränderbar ist.

3. Drehschwingungsdämpfungsanordnung (1) nach Anspruch 2, wobei das antriebsseitige erste Hohlrad (12) und/ oder das abtriebsseitige zweite Hohlrad (14) eine Verzahnung (10) entlang einer Innenumfangsfläche (17) aufweist, wobei die Innenumfangsfläche (17) mit der Verzahnung (10) in einer Umfangsrichtung (20) einen sich verändernden zweiten Abstand (18) zu einer Mittelachse (19) aufweist.

4. Drehschwingungsdämpfungsanordnung (1) nach Anspruch 2, wobei das jeweils mit dem Hohlrad (12, 14) im Eingriff stehende mindestens eine Planetenrad (11, 13) eine zumindest teilweise ellipsenförmige und eine Verzahnung (10) aufweisende Außenumfangsfläche (21) aufweist.

5. Drehschwingungsdämpfungsanordnung (1) nach Anspruch 1, wobei die Planetengetriebeanordnung (6) zumindest zusätzlich einen zweiten Planetenträger (28) mit zumindest einer zweiten Planetenradachse (29) und einem zweiten Wirkradius (30) aufweist, wobei der zweite Wirkradius (30) von dem ersten Wirkradius (27) verschieden ist, wobei auf der zumindest einen zweiten Planetenradachse (31) mindestens zwei Planetenräder (32, 33) angeordnet sind, von denen ein drittes Planetenrad (32) mit dem antriebsseitigen ersten Hohlrad (12) und ein viertes Planetenrad (33) mit dem abtriebsseitigen zweiten Hohlrad (14) kämmt, wobei eine Umschaltung (34) vorgesehen ist, so dass entweder die Planetenräder (11, 13) auf der ersten Planetenradachse (9) oder die Planetenräder (32, 33) auf der zweiten Planetenradachse (31) mit den Hohlrädern (12, 14) drehmomentübertragend im Eingriff sind.

6. Drehschwingungsdämpfungsanordnung (1) nach Anspruch 5, wobei die Planetengetriebeanordnung (6) zumindest mindestens zwei erste Planetenträger (8) mit jeweils einer ersten Planetenradachse (9) und mindestens zwei zweite Planetenträger (28) mit jeweils einer zweiten Planetenradachse (31) umfasst, wobei jeweils erste Planetenträger (8) und zweite Planetenträger (28) in einer Umfangsrichtung (20) abwechselnd angeordnet sind.

7. Drehschwingungsdämpfungsanordnung (1) nach einem der vorhergehenden Ansprüche, wobei der erste Abstand (15) auf zumindest eine der folgenden Arten einstellbar ist:
- durch Verdrehung eines als Phasenschiebeanordnung (7) eingesetzten Torsionsdämpfers; oder
- in Abhängigkeit von einer Drehzahl der Drehschwingungsdämpfungsanordnung (1) um die Mittelachse (19) durch Fliehkraft; oder
- durch eine hydraulische Betätigung.

8. Kraftfahrzeug (22) mit einer Antriebseinheit (23) und einer Abtriebseinheit (24) und einer dazwischen angeordneten Drehschwingungsdämpfungsanordnung (1) nach einem der vorhergehenden Ansprüche.

## Claims

1. Torsional vibration damping arrangement (1), comprising a drive side (2) and an output side (3), a first torque transmission path (4) and, parallel thereto, a second torque transmission path (5) and a planetary gear arrangement (6), for superimposing the torques which are conducted via the torque transmission paths (4, 5) being provided between the drive side (2) and the output side (3), a first phase shifting arrangement (7) for generating a phase shift of rotational unevennesses which are conducted via the first torque transmission path (4) with regard to the rotational unevennesses which are conducted via the second torque transmission path (5) being provided in the first torque transmission path (4), the planetary gear arrangement (6) having at least one first planetary carrier (8) with at least one first planetary gear axle (9) and a first active radius (27), two planetary gears (11, 13) being arranged on the at least one first planetary gear axle (9), of which a first planetary gear (11) meshes with a drive-side first internal gear (12) and a second planetary gear (13) meshes with an output-side second internal gear (14), **characterized in that** it is true at least for a connection between a planetary gear (11, 13) and an internal gear (12, 14) that a first spacing (15) between at least one planetary gear axle (9) and a force transmission point (16) on an internal gear (12, 14) can be changed.

2. Torsional vibration damping arrangement (1) according to Claim 1, it being possible for the first spacing (15) between the at least one planetary gear axle (9) and the force transmission point (16) on an internal gear (12, 14) to be changed on account of an unround planetary gear (11, 13).

3. Torsional vibration damping arrangement (1) according to Claim 2, the drive-side first internal gear (12) and/or the output-side second internal gear (14) having a toothing system (10) along an inner circumferential face (17), the inner circumferential face (17) with the toothing system (10) having a changing second spacing (18) from a centre axis (19) in a circumferential direction (20).

4. Torsional vibration damping arrangement (1) according to Claim 2, the at least one planetary gear (11, 13) which is in engagement in each case with the internal gear (12, 14) having an outer circumferential face (21) which is at least partially elliptical and has a toothing system (10).

5. Torsional vibration damping arrangement (1) according to Claim 1, the planetary gear arrangement (6) having at least additionally a second planetary carrier (28) with at least one second planetary gear axle (29) and a second active radius (30), the second active radius (30) being different from the first active radius (27), at least two planetary gears (32, 33) being arranged on the at least one second planetary gear axle (31), of which a third planetary gear (32) meshes with the drive-side first internal gear (12) and a fourth planetary gear (33) meshes with the output-side second internal gear (14), a switchover means (34) being provided, with the result that either the planetary gears (11, 13) on the first planetary gear axle (9) or the planetary gears (32, 33) on the second planetary gear axle (31) are in engagement with the internal gears (12, 14) in a torque-transmitting manner.

6. Torsional vibration damping arrangement (1) according to Claim 5, the planetary gear arrangement (6) at least comprising at least two first planetary carriers (8) with in each case one first planetary gear axle (9) and at least two second planetary carriers (28) with in each case one second planetary gear axle (31), in each case first planetary carriers (8) and second planetary carriers (28) being arranged alternately in a circumferential direction (20).

7. Torsional vibration damping arrangement (1) according to one of the preceding claims, it being possible for the first spacing (15) to be set in at least one of the following ways:
- by rotation of a torsional damper which is used as a phase shifting arrangement (7); or
- in a manner which is dependent on a rotational speed of the torsional vibration damping arrangement (1) about the centre axis (19) by way of centrifugal force; or
- by way of a hydraulic actuation.

8. Motor vehicle (22) having a drive unit (23) and an output unit (24) and a torsional vibration damping arrangement (1) according to one of the preceding claims which is arranged in between.

## Revendications

1. Agencement d'amortissement des oscillations de torsion (1), comprenant un côté d'entraînement (2) et un côté de sortie (3), une première voie de transfert de couple (4) étant prévue entre le côté d'entraînement (2) et le côté de sortie (3), et parallèlement à celle-ci, une deuxième voie de transfert de couple (5) ainsi qu'un agencement d'engrenage planétaire (6), pour la superposition des couples introduits par les voies de transfert de couple (4, 5), un premier agencement de déphasage (7) étant prévu dans la première voie de transfert de couple (4) pour générer un déphasage des défauts d'uniformité de rotation introduits par le biais de la première voie de transfert de couple (4) par rapport aux défauts d'uniformité de rotation introduits par le biais de la deuxième voie de transfert de couple (5), l'agencement d'engrenage planétaire (6) présentant au moins un premier porte-satellites (8) avec au moins un premier axe de satellite (9) et un premier rayon d'action (27), deux satellites (11, 13) étant disposés sur l'au moins un premier axe de satellite (9), dont un premier satellite (11) s'engrène avec une première couronne dentée du côté de l'entraînement (12) et un deuxième satellite (13) s'engrène avec une deuxième couronne dentée du côté de la sortie (14), **caractérisé en ce que**,
au moins pour une connexion entre un satellite (11, 13) et une couronne dentée (12, 14), une première distance (15) entre au moins un axe de satellite (9) et un point de transfert de force (16) au niveau d'une couronne dentée (12, 14) peut être modifiée.

2. Agencement d'amortissement des oscillations de torsion (1) selon la revendication 1, dans lequel la première distance (15) entre l'au moins un axe de satellite (9) et le point de transfert de force (16) au niveau d'une couronne dentée (12, 14) peut être modifiée du fait de la non rotondité d'un satellite (11, 13).

3. Agencement d'amortissement des oscillations de torsion (1) selon la revendication 2, dans lequel la première couronne dentée du côté de l'entraînement (12) et/ou la deuxième couronne dentée du côté de la sortie (14) présentent une denture (10) le long d'une surface périphérique interne (17), la surface périphérique interne (17) avec la denture (10) présentant dans une direction périphérique (20) une deuxième distance variable (18) à un axe médian (19).

4. Agencement d'amortissement des oscillations de torsion (1) selon la revendication 2, dans lequel l'au moins un satellite (11, 13) en prise à chaque fois avec la couronne dentée (12, 14) présente une surface périphérique extérieure (21) au moins en partie elliptique et présentant une denture (10).

5. Agencement d'amortissement des oscillations de torsion (1) selon la revendication 1, dans lequel l'agencement d'engrenage planétaire (6) présente au moins en outre un deuxième porte-satellites (28) avec au moins un deuxième axe de satellite (29) et un deuxième rayon d'action (30), le deuxième rayon d'action (30) étant différent du premier rayon d'action (27), au moins deux satellites (32, 33) étant disposés sur l'au moins un deuxième axe de satellite (31), dont un troisième satellite (32) s'engrène avec la première couronne dentée du côté de l'entraînement (12) et un quatrième satellite (33) s'engrène avec la deuxième couronne dentée du côté de la sortie (14), une commutation (34) étant prévue de telle sorte que soit les satellites (11, 13) sur le premier axe de satellite (9) soit les satellites (32, 33) sur le deuxième axe de satellite (31) soient en prise avec transfert de couple avec les couronnes dentées (12, 14).

6. Agencement d'amortissement des oscillations de torsion (1) selon la revendication 5, dans lequel l'agencement d'engrenage planétaire (6) comprend au moins deux premiers porte-satellites (8) ayant chacun un premier axe de satellite (9) et au moins deux deuxièmes porte-satellites (28) ayant chacun un deuxième axe de satellite (31), des premiers porte-satellites (8) et des deuxièmes porte-satellites (28) étant à chaque fois disposés en alternance dans une direction périphérique (20).

7. Agencement d'amortissement des oscillations de torsion (1) selon l'une quelconque des revendications précédentes, dans lequel la première distance (15) peut être ajustée par au moins l'une des manières suivantes :
- par rotation d'un amortisseur de torsion utilisé en tant qu'agencement de déphasage (7) ; ou
- en fonction d'une vitesse de rotation de l'agencement d'amortissement des oscillations de torsion (1) autour de l'axe médian (19), par la force centrifuge ; ou
- par une commande hydraulique.

8. Véhicule automobile (22) comprenant une unité d'entraînement (23) et une unité de sortie (24) ainsi qu'un agencement d'amortissement des oscillations de torsion (1) disposé entre elles, selon l'une quelconque des revendications précédentes.
